# EUROPEAN PATENT SPECIFICATION

(11) **EP 1 849 349 B1**
(45) Date of publication and mention of the grant of the patent: **02.09.2009**
(21) Application number: 07106626.0
(22) Date of filing: 20.04.2007
(51) Int. Cl.: A01D 57/20

(54) **Dual belt drive for an agricultural header**
Doppelriemenantrieb für einen landwirtschaftlichen Erntevorsatz
Entraînement par courroie double pour collecteur agricole

(30) Priority: 26.04.2006 US 412145
(43) Date of publication of application: 31.10.2007
(73) Proprietor: Deere & Company, Moline, IL 61265-8098 (US)
(72) Inventor: Coers, Bruce A, Hillsdale, IL 61257 (US); Lovett, Benjamin M, Colona, IL 61241 (US)
(74) Representative: Holst, Sönke

(56) References cited:
- DE-U1- 29 919 023
- US-A- 4 512 140
- US-A- 5 005 343
- US-A- 5 464 371

## Description

The invention relates to agricultural headers. More particularly it relates to platform headers for combines.

Agricultural headers cut and gather crop plants. Headers may be mounted on a variety of vehicles, including combines and windrowers.

US-A-5 464 371 discloses a leader according to the preamble of claim 1.

As combines have increased in size and power, combine headers have increased in width, to cut wider and wider swaths of crop plants for each pass through the field. This increased header width has been accompanied by an increased length of the header conveyors. The conveyors must be longer to extend to the lateral ends of the header. As the conveyors increase in length, the loads placed on them increase and the power of the motor or motors driving the conveyors must also increase. These longer belts with their larger loads will slip, causing the premature belt wear and motor failure.

What is needed is an improved conveyor system that reduces slippage while maintaining crop loss at a minimum. It is an object of this invention to provide such a system.

This object is achieved with the subject matter of claim 1. The dependent claims recited advantageous embodiments.

A header for an agricultural machine has left and right belt conveyor assemblies, each of the left and right assemblies comprising two adjacent conveyors. Each of the two adjacent conveyors have adjacent rollers that are mounted on slidable mounts or linkages. This arrangement permits a single motor to drive the two rollers. It also permits the mounts to slide and equalize the tension in both belts of the adjacent conveyors.

An embodiment of the invention is shown in the drawings, in which
Figure 1 is a side view of a combine having a dual belt drive system header attached
Figure 2 is a plan view of the combine of Figure 1 showing the left side and right side dual belt drive systems, but with the reel and arms removed.
Figure 3 is a fragmentary plan view of the left side dual belt drive system including drive motor, drive rollers, roller mounts and dual belt arrangement on the left side of the combine header of Figure 1.
Figure 4 is a cross-sectional view of the header frame and the front roller mount supporting the drive rollers as taken at Section Line 4-4 in Figure 3. The rear roller mount is identically arranged but in mirror form.

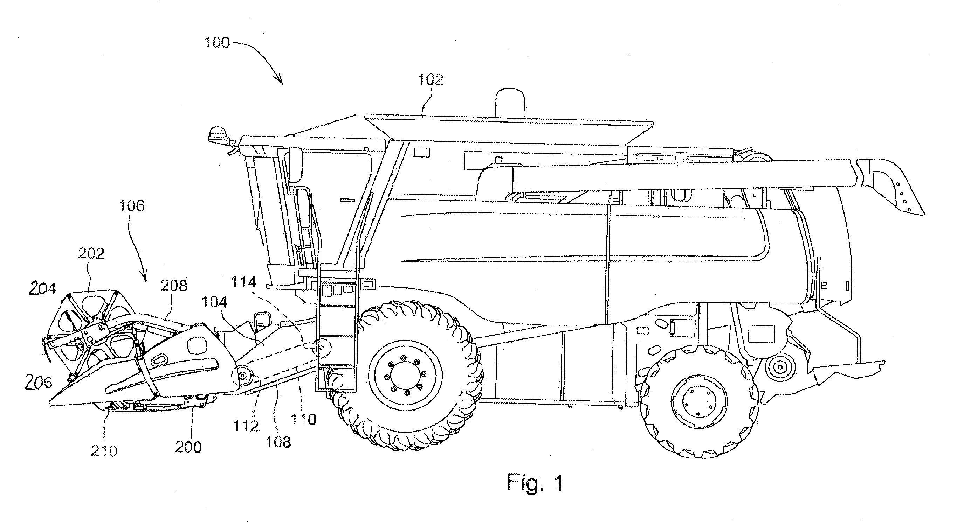

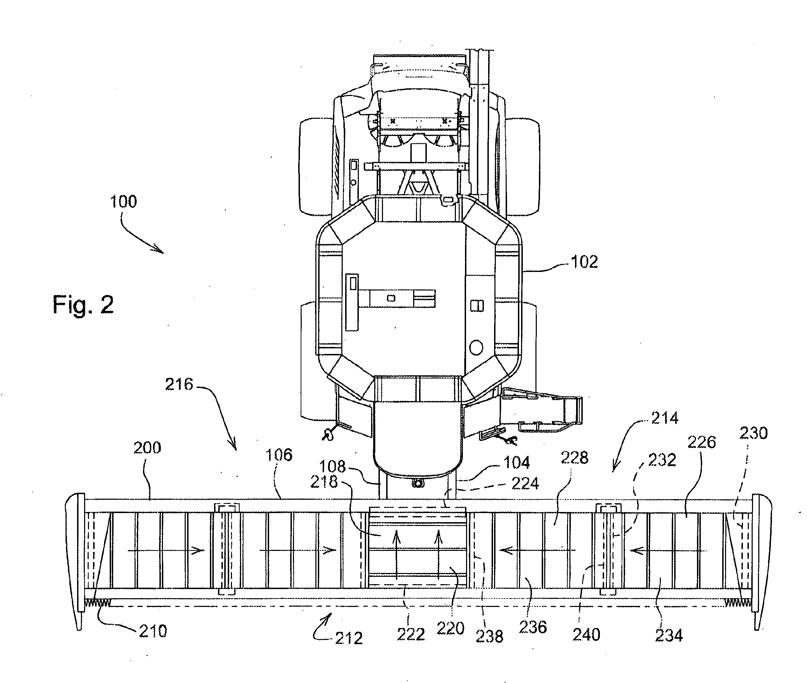

Referring to Figures 1 and 2, an agricultural combine 100 is shown, here comprising a self-propelled vehicle 102 having a feeder house 104 fixed to and extending from the front end of the vehicle, and a header 106 supported on the feeder house 104 and extending forward of the feeder house.

The feeder house includes a frame 108 that surrounds conveyor 110. The conveyor propels plant matter from the forward end of conveyor 110 to the rear end of conveyor 110. Conveyor 110 is preferably an endless belt or chain that extends around front roller or sprocket 112 and a rear roller or sprocket 114. Cut crop matter is deposited at the mouth of the feeder house where it is engaged by conveyor 110 and carried by conveyor 110 to the rear of the feeder house. It is then deposited in a threshing, separating and cleaning system (not shown) inside vehicle 102, which separates desired crop material from unwanted plant matter and saves the crop material in a grain tank (not shown) disposed at the top of the vehicle 102.

The header comprises frame or chassis 200 that is supported on the feeder house and extends laterally to left and right ends of the header. A reel 202 is coupled to the left and right sides of the frame which further includes a series of laterally extending batts 204 to each of which numerous downwardly extending fingers or tines 206 are fixed in parallel relation.

The reel is supported on two arms 208 that are mounted at their rear ends to the left and right ends of frame 200 and are mounted to the reel at their front ends. The reel serves to direct the plants to be harvested against a cutter bar 210 for cutting. When the plants are cut, reel 208 further directs the cut crop matter onto a conveyor system 212. System 212 extends across the width of the header frame from the left end to the right end.

Referring to Figure 2, the conveyor system 212 includes a left side conveyor assembly 214, a right side conveyor assembly 216, and a central conveyor 218. The left and right side conveyors extend laterally across the left side and the right side of the header, respectively, to carry cut crop matter from the left and right ends of the header inward to the central conveyor 218. The central conveyor extends fore-and-aft to carry cut crop matter from the left and right conveyors backward to the mouth of the feeder house conveyor 110, which receives it and transports it into the vehicle 102 for further processing.

The central conveyor 218 is preferably in the form of an endless belt or loop 220 of fabric, chain or other flexible material supported on laterally extending front and rear rollers or sprockets 222, 224, that rotate to drive the upper surface of the belt 220 from the front to the rear carrying cut crop matter to the feeder house.

The left side conveyor assembly is in the form of two conveyors lying end to end--a left outer conveyor 226 and a left inner conveyor 228. These two conveyors are disposed end to end to define a continuous moving and generally flat surface that is comprised of the upper surfaces of the inner conveyor belt and the outer conveyor belt. When the conveyors are engaged, the two upper surfaces of the two belts comprising the surface move inwardly and perpendicular to the direction of vehicle travel with respect and preferably at the same speed.

Left outer conveyor 226 includes an outer, idler roller 230 that is mounted on the header frame at the left end of the header. It also includes an inner, drive roller 232 that is slidably mounted to the header frame generally at the midpoint of the left side of the header frame. Rollers 230 and 232 extend fore-and-aft with respect to the combine overall. An endless belt or loop 234 of fabric or other flexible material is wrapped around and supported by drive roller 232 and idler roller 230. This loop is driven in endless rotation about the rollers 230, 232 by drive roller 232.

Left inner conveyor 228 includes an inner, idler roller 238 that is mounted on the header frame immediately adjacent to the central conveyor. It also includes an outer, drive roller 240 that is slidably mounted to the header frame adjacent to drive roller 232. Rollers 238, 240 extend fore-and-aft with respect to the combine overall. An endless belt or loop 236 of fabric or other flexible material is wrapped around and supported by the drive roller and the idler roller. This loop is driven in endless rotation about the rollers 238, 240 by drive roller 240. The upper surfaces of belts 234, 236 are generally coplanar to permit cut crop matter to travel in a generally straight line across the top surfaces of belts 234, 236.

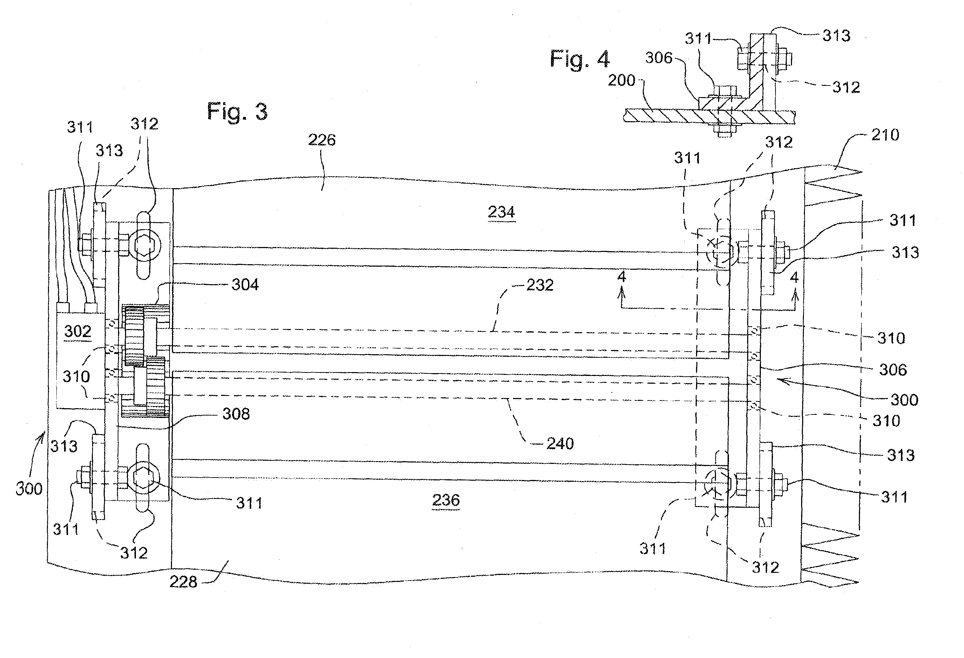

Referring now to Figures 3-4, a drive roller support system 300 is shown. The system 300 includes a drive motor 302 that is drivingly coupled to a gearbox 304 that in turn is drivingly coupled to the rear ends of drive rollers 232, 240. Motor 302 and gearbox 304 drive the rollers and belts 234, 236 in rotation, preferably at the same angular velocity. They preferably drive them such that the top surfaces of the two belts driven by the inner and outer conveyors are driven at the same linear velocitythe same both in direction and in magnitude. This should not suggest that the angular roller velocities and linear belt velocities cannot be changed, only that they are preferably the same for both the inner and outer conveyors at any point in time.

The system also includes front 306 and rear 308 roller mounts that support rollers 232, 240 on bearings 310 for rotation by motor 302. The roller mounts hold the drive rollers 232, 240 in close proximity to one another such that material leaving the left outer conveyor 226 is conveyed to the left inner conveyor 236 without significant loss. The roller mounts are mounted for slidable movement in a side-to-side direction (with respect to the vehicle and the direction of travel through the field). This permits them to slide in a direction parallel to the longitudinal extent of the cutter bar. This floating mounting system permits the mounts to reposition themselves side to side, when the belts are tensioned, stretched or otherwise repositioned. This floating and sliding movement is provided by bolts 311 or other fasteners that extend upward from the frame of the header and are received in slots 312 formed in front and rear motor mounts 306, 308 and bolts 311 that extend sideways through slots 312 in ears 313 and into mounts 306, 308. Ears 313 are fixed to and extend upward from the frame 200. When bolts 311 are loose, this arrangement permits the mounts to float or slide in a side-to-side direction. This is particularly useful when the belts are adjusted. If one belt is slackened (or tightened), for example by adjusting the position of an idler roller 230 or 238, the corresponding drop (or increase) in belt tension is communicated to the other belt, which is simultaneously slackened as the mounts 306, 308 float laterally left or right across the width of the header frame parallel to the longitudinal extent of the cutter bar 210. The initial unequal tensions in each belt are applied to the mounts and cause the roller mounts to slide slightly, side-to-side, until the tensions in both belts are equalized. This permits the tensions in both belts to be adjusted and equalized simultaneously by a single belt tensioner (not shown). Once adjusted, the mounts can be permitted to float, or alternatively, they can be fixed with respect to frame 200 by tightening bolts 311.

System 300 also permits a single drive motor to drive two belts with two rollers, thereby reducing the load on each belt individually. Rather than having the motor drive one long belt that extends the entire left side of the header from the left end of the header frame to the central conveyor belt, the load is split in two, and motor 302 can drive two separate and shorter belts with two rollers instead of just one drive roller. This permits the belt tension to be reduced. Less tension is needed since each belt is individually carrying a smaller load. Whenever belt tension is reduced, belt wear and belt slippage is reduced.

The illustrations and description herein are directed to the left side conveyor assembly 214. The right side conveyor assembly 216 is identically configured and arranged as assembly 214, but in mirror image form mirrored about a longitudinal cutting plane that extends the length of the combine 100 and vertically.

Two motors may be provided to drive the inner and outer conveyor belts, one motor for each belt. The two motors may be mounted at the front and rear mounts or one may be mounted at the front mount and one at the rear mount. The front and rear mounts may be separate structures or they may be coupled together with a beam extending from the front mount to the rear mount. The two drive rollers 232, 240 may have different diameters and different angular velocities. In another configuration, gearbox 304 may be configured to drive belt 236 at a higher speed than belt 234. Since belt 236 is the inner belt, it not only receives cut crop falling on it from cutter bar 210 but also receives cut crop from belt 234 of the outer conveyor. By operating belt 236 at a higher speed than belt 234, the thickness of the cut crop map on belt 236 can be reduced and the loads on the two belts made more equal. The mounts need not slide with respect to the header frame but may be supported with articulating mechanisms of other constructions that permit rollers 232, 240 to translate back and forth as the belts are tensioned. The mounts may be tightened down and fixed with respect to the header frame once the outer and inner conveyor belts are appropriately tensioned, for example, by tightening the bolts 310 to fix the front and rear mounts against the header frame. The guide and drive rollers may be formed as a single roller or a plurality of rollers. Rather than a gearbox and gear arrangement driving rollers 232, 240, a belt arrangement can be employed.

## Claims

1. A header for an agricultural vehicle, comprising:
a frame (200) having a leading edge, left and right ends, and a central portion between the left and right ends;
a cutter bar (210) mounted to the leading edge of the frame (200) and extending from the left end to the right end;
a reel (208) mounted to the frame (200) and extending from the left end to the right end;
a central conveyor (218) disposed on the central portion to carry cut crop material rearward to a feeder house inlet; and
left and right side conveyor assemblies (214, 216) configured to receive crop material cut by the cutter bar (210) and to convey it to the central conveyor (218), **characterised in that**
wherein each of the left side and right side conveyor assemblies (214, 216) comprises inner and outer conveyors (226, 228) and floating roller mounts (306, 308) for supporting adjacent rollers (232, 240) of the inner and outer conveyors (226, 228), and **in that**
each of said inner and outer conveyors (226, 228) comprises an endless belt (234, 236) supported on an inner roller (232, 238) and an outer roller (230, 240), wherein the inner roller (232) of the outer conveyor (226) and the outer roller (240) of the inner conveyor (228) are both supported in the front and rear roller mounts (306, 308).

2. The header of claim 1, further comprising a motor (302) coupled to the inner roller (232) of the outer conveyor (226) and the outer roller (240) of the inner conveyor (228) to drive both conveyors (226, 228).

3. The header of claim 2, wherein the motor (302) is coupled to the rear ends of the inner roller (232) of the outer conveyor (226) and the outer roller (240) of the inner conveyor (228) to drive the rollers (232, 240).

4. The header of one of claims 1 to 3, wherein at least one of the roller mounts (306, 308) is slidably coupled to the frame (200) of the header.

5. The header of one of claims 1 to 4, wherein the inner roller (232) of the outer conveyor (226) and the outer roller (240) of the inner conveyor (228) are mounted to two roller mounts (306, 308) that are slidably coupled to the frame (200) of the header to slide in a direction parallel to the longitudinal extent of the cutter bar (210).

6. The header of one of claims 1 to 5, wherein the roller mounts (306, 308) float sufficient to automatically reposition the inner roller (232) of the outer conveyor (226) and the outer roller (240) of the inner conveyor (228) float sufficient to equalize tension in the endless belts (234, 236) of the inner and outer conveyors (226, 228).

7. The header of one of claims 1 to 6, wherein the inner conveyor (228) is configured to be driven at a higher speed than the outer conveyor (226).

## Patentansprüche

1. Vorsatz für ein landwirtschaftliches Fahrzeug, mit Folgendem:
einem Rahmen (200), der einen Vorderrand, ein linkes und ein rechts Ende und einen Mittelteil zwischen dem linken und dem rechten Ende aufweist;
einem Mähbalken (210), der am Vorderrand des Rahmens (200) angebracht ist und sich vom linken Ende zum rechten Ende erstreckt;
einer Haspel (208), die am Rahmen (200) angebracht ist und sich vom linken Ende zum rechten Ende erstreckt;
einer zentralen Fördereinrichtung (218), die am zentralen Teil angeordnet ist, um geschnittenes Erntegut nach hinten zu einem Fördergehäuseeinlass zu befördern; und
Förderanordnungen (214, 216) auf der linken und auf der rechten Seite, die dazu konfiguriert sind, durch den Mähbalken (210) geschnittenes Erntegut aufzunehmen und es zu der zentralen Fördereinrichtung (218) zu befördern,
**dadurch gekennzeichnet, dass**
sowohl die Förderanordnung (214, 216) auf der linken als auch auf der rechten Seite eine innere und eine äußere Fördereinrichtung (226, 228) und schwimmende Rollenhalterungen (306, 308) zum Abstützen benachbarter Rollen (232, 240) der inneren und der äußeren Fördereinrichtung (226, 228) umfasst, und dass
sowohl die innere als auch die äußere Fördereinrichtung (226, 228) ein Endlosband (234, 236) umfasst, das auf einer inneren Rolle (232, 238) und einer äußeren Rolle (230, 240) gestützt wird, wobei die innere Rolle (232) der äußeren Fördereinrichtung (226) und die äußere Rolle (240) der inneren Fördereinrichtung (228) beide in der vorderen und in der hinteren Rollenhalterung (306, 308) gestützt werden.

2. Vorsatz nach Anspruch 1, weiterhin mit einem Motor (302), der mit der inneren Rolle (232) der äußeren Fördereinrichtung (226) und der äußeren Rolle (240) der inneren Fördereinrichtung (228) verbunden ist, um die beiden Fördereinrichtungen (226, 228) anzutreiben.

3. Vorsatz nach Anspruch 2, wobei der Motor (302) mit den hinteren Enden der inneren Rolle (232) der äußeren Fördereinrichtung (226) und der äußeren Rolle (240) der inneren Fördereinrichtung (228) verbunden ist, um die Rollen (232, 240) anzutreiben.

4. Vorsatz nach einem der Ansprüche 1 bis 3, wobei mindestens eine der Rollenhalterungen (306, 308) verschiebbar mit dem Rahmen (200) des Vorsatzes verbunden ist.

5. Vorsatz nach einem der Ansprüche 1 bis 4, wobei die innere Rolle (232) der äußeren Fördereinrichtung (226) und die äußere Rolle (240) der inneren Fördereinrichtung (228) an zwei Rollenhalterungen (306, 308) angebracht sind, die verschiebbar mit dem Rahmen (200) des Vorsatzes verbunden sind, um in einer parallel zur Längserstreckung des Mähbalkens (210) verlaufenden Richtung zu gleiten.

6. Vorsatz nach einem der Ansprüche 1 bis 5, wobei die Rollenhalterungen (306, 308) ausreichend schwimmen, um die innere Rolle (232) der äußeren Fördereinrichtung (226) und die äußere Rolle (240) der inneren Fördereinrichtung (228)automatisch neu zu positionieren, um Spannung in den Endlosbändern (234, 236) der inneren und der äußeren Fördereinrichtung (226, 228) auszugleichen.

7. Vorsatz nach einem der Ansprüche 1 bis 6, wobei die innere Fördereinrichtung (228) dazu konfiguriert ist, mit einer höheren Geschwindigkeit als die äußere Fördereinrichtung (226) angetrieben zu werden.

## Revendications

1. Collecteur de véhicule agricole, comprenant :
un cadre (200) ayant un bord avant, des extrémités droite et gauche et une portion centrale entre les extrémités droite et gauche ;
une barre de coupe (210) montée sur le bord avant du cadre (200) et s'étendant depuis l'extrémité gauche jusqu'à l'extrémité droite ;
une bobine (208) montée sur le cadre (200) et s'étendant depuis l'extrémité gauche jusqu'à l'extrémité droite ;
un transporteur central (218) disposé sur la portion centrale pour porter des matières de récolte coupées vers l'arrière jusqu'à une entrée de logement d'un dispositif d'alimentation ; et
des ensembles de transporteurs gauche et droit (214, 216) configurés pour recevoir la matière de récolte coupée par la barre de coupe (210) et pour la transporter jusqu'au transporteur central (218), **caractérisé en ce que** chacun des ensembles de transporteurs côté gauche et côté droit (214, 216) comprend des transporteurs interne et externe (226, 228) et des fixations de rouleaux flottantes (306, 308) pour supporter des rouleaux adjacents (232, 240) des transporteurs interne et externe (226, 228), et **en ce que** chacun desdits transporteurs interne et externe (226, 228) comprend une courroie sans fin (234, 236) supportée sur un rouleau interne (232, 238) et un rouleau externe (230, 240), le rouleau interne (232) du transporteur externe (226) et le rouleau externe (240) du transporteur interne (228) étant tous deux supportés dans les fixations de rouleaux (306, 308) avant et arrière.

2. Collecteur selon la revendication 1, comprenant en outre un moteur (302) accouplé au rouleau interne (232) du transporteur externe (226) et au rouleau externe (240) du transporteur interne (228) pour entraîner les deux transporteurs (226, 228).

3. Collecteur selon la revendication 2, dans lequel le moteur (302) est accouplé aux extrémités arrière du rouleau interne (232) du transporteur externe (226) et du rouleau externe (240) du transporteur interne (228) pour entraîner les rouleaux (232, 240).

4. Collecteur selon l'une quelconque des revendications 1 à 3, dans lequel au moins l'une des fixations de rouleaux (306, 308) est accouplée de manière coulissante au cadre (200) du collecteur.

5. Collecteur selon l'une quelconque des revendications 1 à 4, dans lequel le rouleau interne (232) du transporteur externe (226) et le rouleau externe (240) du transporteur interne (228) sont montés sur deux fixations de rouleaux (306, 308) qui sont accouplées de manière coulissante au cadre (200) du collecteur de manière à coulisser dans une direction parallèle à l'étendue longitudinale de la barre de coupe (210).

6. Collecteur selon l'une quelconque des revendications 1 à 5, dans lequel les fixations de rouleaux (306, 308) flottent suffisamment pour repositionner automatiquement le rouleau interne (232) du transporteur externe (226) et le rouleau externe (240) du transporteur interne (228) de manière à égaliser la tension dans les courroies sans fin (234, 236) des transporteurs interne et externe (226, 228).

7. Collecteur selon l'une quelconque des revendications 1 à 6, dans lequel le transporteur interne (228) est configuré pour être entraîné à une plus grande vitesse que le transporteur externe (226).
